(19) **Europäisches Patentamt**

**European Patent Office**

**Office européen des brevets**

(11) Veröffentlichungsnummer : **0 347 650 B1**

(12) # EUROPÄISCHE PATENTSCHRIFT

(45) Veröffentlichungstag der Patentschrift :
**27.03.91 Patentblatt 91/13**

(21) Anmeldenummer : **89110321.0**

(22) Anmeldetag : **07.06.89**

(51) Int. Cl.⁵ : **B60H 1/24, F24F 13/06**

(54) Luftauslass für Innenräume, insbesondere für den Innenraum eines Kraftfahrzeuges.

(30) Priorität : **20.06.88 DE 3821109**

(43) Veröffentlichungstag der Anmeldung :
**27.12.89 Patentblatt 89/52**

(45) Bekanntmachung des Hinweises auf die
Patenterteilung :
**27.03.91 Patentblatt 91/13**

(84) Benannte Vertragsstaaten :
**DE ES FR GB IT NL SE**

(56) Entgegenhaltungen :
**EP-A- 0 211 150**
**GB-A- 1 130 009**
**US-A- 1 850 822**
**US-A- 4 020 752**

(73) Patentinhaber : **Siemens Aktiengesellschaft**
**Wittelsbacherplatz 2**
**W-8000 München 2 (DE)**

(72) Erfinder : **Soethout, Freddie**
**Hunsrückstrasse 5**
**W-5000 Köln 60 (DE)**
Erfinder : **Radtke, Wolfgang**
**Nachtigallenweg 46**
**W-5063 Stelnebrück (DE)**

**Beschreibung**

Die Erfindung bezieht sich auf einen Luftauslaß gemäß Oberbegriff des Anspruchs 1 ; ein derartiger Luftauslaß ist aus der EP-A-242 582 bekannt.

Bei dem vorgenannten bekannten Dralluftauslaß ist ein Verstellteil mit zur Achse eines Luftschachtes geneigten Luftleitwänden in diesem in unterschiedlicher axialer Eintauchtiefe arretierbar angeordnet ; nach einem Ausführungsbeispiel umfaßt das Verstellteil einen zentralen Kanalstutzen, der auch eine sekundäre axialgerichtete Zentralströmung führen soll und dazu wenige in Achsrichtung des Luftschachtes verlaufende Leitwände aufweist.

Zur Belüftung eines Kraftfahrzeuges ist ein Luftauslaß bekannt, bei dem die Ausströmöffnung durch Leitwände gitterartig in eine größere Anzahl von Luftführungskanälen unterteilt ist. Durch gemeinsames Verschwenken der Leitwände, wodurch dem Luftauslaß die Form einer Kugelkalotte erteilt wird, kann eine Neigung bestimmter Leitwände gegenüber der Achse des Luftauslasses erreicht werden. Dies hat zur Folge, daß die Ausströmungsrichtungen der Luftführungskanäle von der Achse des Luftauslasses divergieren, so daß aus dem Luftauslaß ein in verschiedene Strömungsrichtungen aufgefächerter Luftstrahl austritt. Zur Einstellung dieses Luftstrahles können die Leitwände mit zwei kreuzartig angeordneten Spannfedern in Schwenkverbindung stehen. Vorzugsweise sind die Leitwände Bestandteile eines Gitters aus einem gummiartigen Stoff, in dem die Spannfedern verlaufen (DE-A-24 44 116).

Zum Belüften oder Klimatisieren von Aufenthaltsräumen ist weiterhin ein verstellbarer, dem Aufenthaltsbereich einer Person zugeordneter Luftauslaß bekannt, der zwei konzentrisch zueinander angeordnete Auslaßbereiche aufweist. Beide Auslaßbereiche sind in mehrere Auslaßkanäle unterteilt, die jeweils von einem inneren und einem äußeren Wandbereich und von durch Schaufeln gebildete Leitwände begrenzt sind. Die Schaufeln des äußeren Auslaßbereiches können schräg angestellt sein, um auf die Luftstrahlen drallgebend einzuwirken. Der innere Auslaßbereich kann mit einem verschiebbaren Einsatz zur Einstellung des Luftstromes versehen sein (DE-C-25 25 917, DE-A-27 02 334).

Ausgehend von einem Dralluftauslaß mit aufgefächertem Luftstrahl der eingangs genannten Art liegt der Erfindung die Aufgabe zugrunde, den Luftauslaß so auszubilden, daß bei ebener Gestaltung des Auslaßbereiches eine über den gesamten Ausströmradius besonders homogene Luftverteilung und ein stabiles Ausströmverhalten erreicht werden.

Zur Lösung dieser Aufgabe ist gemäß der Erfindung vorgesehen, daß jeder Auslaßbereich mit zur Achse des Luftauslasses geneigten Leitwänden versehen ist und die Leitwände des einen Auslaßbereiches entgegengesetzt zu den entsprechenden Leitwänden des anderen Auslaßbereiches geneigt sind.

Bei einer derartigen Ausgestaltung des Luftauslasses wird unter Beibehaltung einer intensiven Mischung der Luftströme aller Auslaßkanäle ein unkontrolliertes "Aufplatzen" des aufgefächerten Luftstrahles vermieden.

Die Ausströmcharakteristik des Luftauslasses kann durch unterschiedliche weitere Maßnahmen den verschiedensten Anforderungen angepaßt werden. So ist es u. a. sinnvoll, daß der umschließende Auslaßbereich von einem oder mehreren weiteren Auslaßbereichen umschlossen ist und/oder daß der umschlossene Auslaßbereich einen oder mehrere weitere Auslaßbereiche umschließt. Diese weiteren Auslaßbereiche sind zweckmäßig ebenfalls in Luftführungskanäle unterteilt, um die Aufteilung des Luftstromes in eine Vielzahl kleiner Luftströme zu verbessern. Die unterteilenden Leitwände eines oder mehrerer weiterer Auslaßbereiche können ebenfalls gegenüber der Achse des Luftauslasses geneigt sein. Durch Vergößerung der Neigungswinkel der unterteilenden Leitwände von einem inneren Auslaßbereich zu äußeren Auslaßbereichen hin kann eine sehr breite Auffächerung des Luftstromes erzielt werden. Diese Auffächerung kann auch noch durch eine Neigung der inneren und äußeren Seitenwände der Luftführungskanäle gegenüber der Luftauslaßachse nach außen verstärkt werden, insbesondere durch eine von innen nach außen von Auslaßbereich zu Auslaßbereich zunehmende konische Neigung der Seitenwände. Die homogene und stabile Ausströmcharakteristik des Luftauslasses wird dadurch nicht beeinträchtigt.

Die Ausströmcharakteristik des Luftauslasses kann insbesondere dann, wenn der Luftauslaß fünf oder mehr Auslaßbereiche aufweist, auch dadurch beeinflußt werden, daß die unterteilenden Leitwände von zwei oder mehr einander benachbarten Auslaßbereichen in der gleichen Richtung geneigt sind. -Um beispielsweise bei einem Kraftfahrzeug den Kniebereich im Fahrzeuginnenraum sitzender Personen weniger mit Luft zu beaufschlagen und den Kopfbereich etwas mehr, kann durch gruppenweise oder segmentweise unterschiedliche Wahl der Neigungswinkel der Leitwände eines oder mehrerer Auslaßbereiche und gegebenenfalls unterschiedliche Wahl der Neigungswinkel der Seitenwände der Luftführungskanäle eine individuelle Raumströmungskontur geschaffen werden, die auch partiell nicht zu Zugerscheinungen führt. Dabei können auch eine oder mehrere Leitwände eines weiteren umschließenden Auslaßbereiches parallel zur Achse des Luftauslasses verlaufen und die Neigungswinkel der Leitwände der Luftführungskanäle innerhalb eines Auslaßbereiches können gruppen- bzw. segmentweise unterschiedliche sein.

Zusätzlich können wenigstens einige der Luftführungskanäle eines Auslaßbereiches absperrbar ausgebildet sein.

Hinsichtlich der praktischen Ausgestaltung der Luftauslässe empfiehlt es sich, die Luftführungskanäle der Auslaßbereiche kreisringförmig oder rechteckförmig, insbesondere quadratisch, anzuordnen. Dabei können die Auslaßbereiche unterschiedlich breit gewählt werden.

Zur Erzielung spezieller Ausströmcharakteristiken kann auch innerhalb des umschlossenen Auslaßbereiches des Luftauslasses ein innerster, zentraler Auslaßbereich angeordnet sein, dessen Leitwände parallel zueinander verlaufen und die gegebenenfalls gemeinsam schwenkbar sind. Insbesondere kann dieser innerste Auslaßbereich auch absperrbar sein. Mit einer derartigen Ausgestaltung kann ein aufgefächerter Luftstrahl mit einem gerichteten zentralen Strömungsbereich kombiniert werden.

Eine in weiten Bereichen variable Ausströmcharakteristik kann weiterhin dadurch erzielt werden, daß die Neigung wenigstens einiger Leitwände eines oder mehrerer Auslaßbereiche einstellbar ist. Durch die einstellbare Ausgestaltung der Leitwände, beispielsweise mittels einer Mechanik, wie sie für sogenannte Lamellen- oder Jalousieauslässe üblich ist (DE-A- 2 262 307, DE-A-29 36 185, DE-A-35 29 463), hat man die Möglichkeit, einige der inneren, mittleren oder äußeren ringartigen Auslaßbereiche ringweise oder ring-segmentweise richtbar zu gestalten, so daß der fest in einer Wandebene eingebaute Luftauslaß durch Verstellen der Luftführungskanäle gebündelt oder auf unterschiedliche Raumpunkte gerichtet werden kann. Bei fest in einer Wandebene eingebautem Luftauslaß kann die Einstellung des Gesamtluftstrahles auf unterschiedliche Raumpunkte ebenso durch Drosselung bzw. Absperrung einzelner gegengerichteter Luftführungskanäle oder Ringsegmente der Auslaßbereiche bewirkt werden.

Vier Ausführungsbeispiele des neuen Luftauslasses sind in den Figuren 1 bis 5 schematisch dargestellt. Dabei zeigt

Fig. 1 einen kreisringförmigen Luftauslaß mit drei Auslaßbereichen in Ansicht,

Fig. 2 den Luftauslaß gemäß Fig. 1 in Draufsicht,

Fig. 3 einen Luftauslaß mit quadratisch-ringförmiger Anordnung von drei Auslaßbereichen,

Fig. 4 einen Luftauslaß mit rechteckförmig-ringartiger Anordnung von zwei Auslaßbereichen, die einen innersten Auslaßbereich herkömmlicher Bauweise umgeben, und

Fig. 5 einen kombinierten Luftauslaß aus einem ersten Auslaßteil mit zwei Auslaßbereichen und quadratisch-ringförmiger Anordnung der Luftführungskanäle und einem zweiten Auslaßteil mit einem herkömmlichen quadratischen Lamellenauslaß, wobei beide Auslaßteile in einem gemeinsamen Gehäuse schwenkbar bzw. drehbar angeordnet sind.

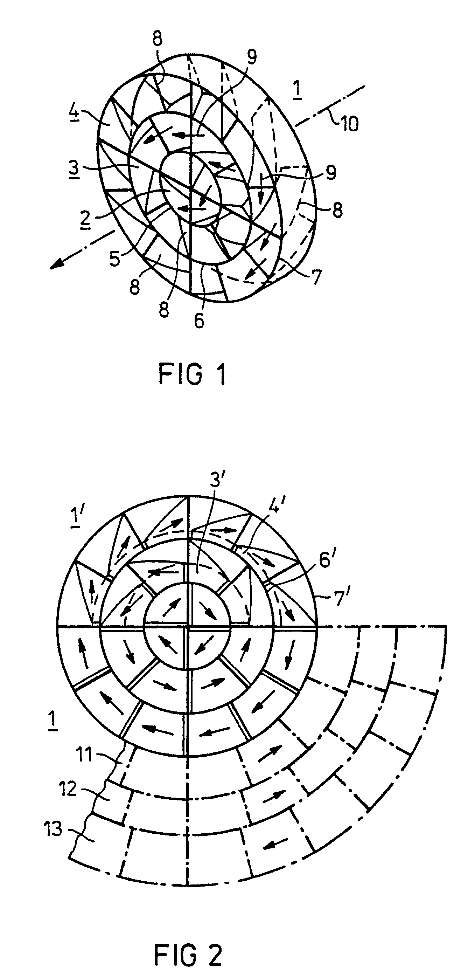

Fig. 1 zeigt einen kreisringförmigen Luftauslaß 1, der drei konzentrisch zueinander angeordnete ebene Auslaßbereiche 2, 3 und 4 aufweist. Die drei Auslaßbereiche sind durch zwei konzentrisch zueinander angeordnete, zylindrische Seitenwände 5 und 6 voneinander getrennt. Eine Außenwand 7 begrenzt den äußeren Auslaßbereich 4. Jeder Auslaßbereich ist durch Leitwände 8, die in Umfangsrichtung des Auslaßbereiches aufeinanderfolgend angeordnet sind, in mehrere Luftführungskanäle 9 unterteilt. Die Leitwände 8 sind gegenüber der Achse 10 des Luftauslasses geneigt. Die Neigung der Leitwände 8 ist dabei von Auslaßbereich zu Auslaßbereich unterschiedlich gewählt. Im äußeren Luftauslaßbereich 4 sind die Leitwände 8 im Uhrzeigersinn geneigt, so daß die Luft aus den entsprechenden Luftführungskanälen mit einem im Uhrzeigersinn wirkenden Drall aus dem äußeren Luftauslaßbereich austritt. Die Leitwände 8 des mittleren Auslaßbereiches 3 sind entgegen dem Uhrzeigersinn und damit entgegengesetzt zu den Leitwänden 8 des äußeren Auslaßbereiches 4 geneigt, so daß die Luft aus diesem Auslaßbereich mit einem gegen den Uhrzeigersinn gerichteten Drall austreten kann. Der innerste Auslaßbereich 2 weist nur vier Luftführungskanäle auf, deren Leitwände in der gleichen Richtung wie die Leitwände des äußeren Luftauslaßbereiches 4 geneigt sind.

Fig. 2 zeigt einen Luftauslaß, der in der unteren Hälfte 1 dem Luftauslaß gemäß Fig. 1 entspricht. Hierbei verlaufen die Seitenwände 5, 6 und 7 senkrecht zur Zeichenebene. In der oberen Hälfte des Luftauslasses ist eine Variante 1' dargestellt, bei der die Seitenwände 6' und 7' der Luftauslaßbereiche 3' und 4' konisch geneigt sind, d. h. kegelig verlaufen. Durch diese Neigung der Seitenwände wird eine stärkere Auffächerung des Luftstrahles bewirkt. -In Fig. 2 ist durch eine gestrichelte Darstellung weiterhin gezeigt, daß der äußere Auslaßbereich 4 von weiteren Auslaßbereichen, im vorliegenden Fall von den Auslaßbereichen 11, 12 und 13 umgeben sein kann, die ähnlich wie die Luftauslaßbereiche 3 und 4 bzw. 3' und 4' ausgebildet sein können. Gegebenenfalls können die Luftauslaßbereiche unterschiedlich breit sein.

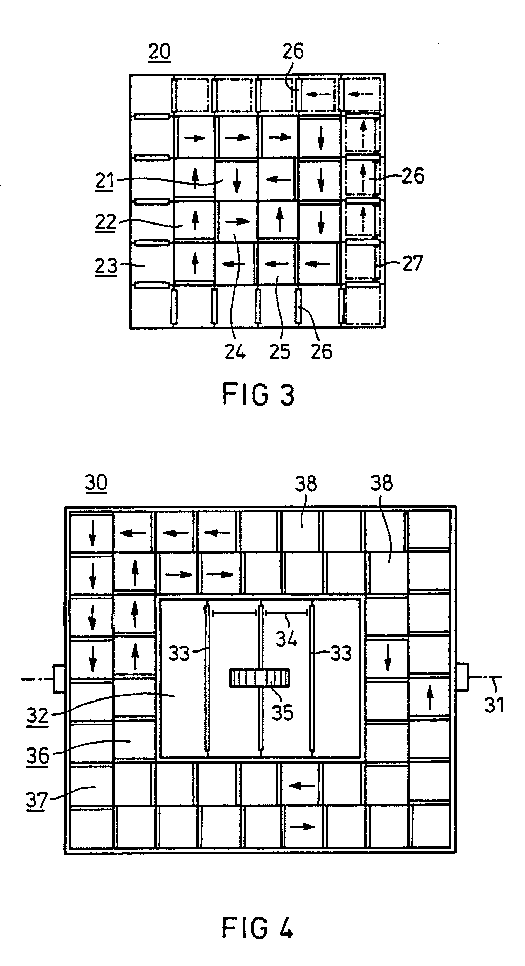

Fig. 3 zeigt einen quadratisch ausgebildeten Luftauslaß 20, dessen Achse senkrecht auf der Zeichenebene steht. Dieser Luftauslaß hat ebenfalls drei Auslaßbereiche, nämlich einen inneren Auslaßbereich 21, einen ringartigen mittleren Auslaßbereich 22 und einen ringartigen äußeren Auslaßbereich 23. Jeder Auslaßbereich ist durch Leitwände in mehrere Luftführungskanäle unterteilt. Die Leitwände 24 des inneren Auslaßbereiches 21 sind dabei entgegen dem Uhrzeigersinn gegenüber der Achse des Luftauslasses geneigt, die Leitwände 25 des mittleren Auslaßbereiches 22 sind dagegen im Uhrzeigersinn gegenüber der Achse des Luftauslasses geneigt. Die Leitwände 26 des äußeren Luftauslaßbereiches 23 sind verstellbar ausgebildet. Diese Leitwände haben die Form einer Lamelle oder einer Klappe, wobei jeweils fünf aufeinanderfolgende Leitwände mittels einer Koppelstange 27 nach Art eines Jalousie- oder eines Lamellen-Auslasses miteinander gekoppelt sind. In dem dargestellten Ausführungsbeispiel sind die Leitwände des oberen und des rechten Ringabschnittes in der geneigten Stellung dargestellt, während die Leitwände des linken und des unteren Ringabschnittes in einer senkrecht zur Zeichenebene verlaufenden Position dargestellt sind. Die Leitwände 26 des linken und des unteren Ringabschnittes bilden hierbei zusammen mit den entsprechenden Seitenwänden Luftführungskanäle, aus denen die einzelnen Luftströme parallel zur Achse des Luftauslasses auftreten.

Fig. 4 zeigt einen rechteckförmigen Luftauslaß 30, der um eine Achse 31 schwenkbar ist und außer einem innersten, in bekannter Weise als richtbarer Lamellen-Auslaß ausgestalteten Auslaßbereich 32 einen inneren ringartigen Auslaßbereich 36 und einen äußeren ringartigen Auslaßbereich 37 aufweist. Der innerste Auslaßbereich 32 ist mit drei richtbaren Lamellen 33 ausgerüstet, die über eine Koppelstange 34 miteinander verbunden sind und denen der Bedienknopf 35 zugeordnet ist. Die Leitwände 38 der beiden Auslaßbereiche 36 und 37 sind feststehend angeordnet, wobei die Leitwände des inneren Auslaßbereiches 36 im Uhrzeigersinn gegenüber der Achse des Luftauslasses geneigt sind, während die Leitwände des äußeren Auslaßbereiches 37 entgegen dem Uhrzeigersinn gegenüber der Achse des Luftauslasses geneigt sind.

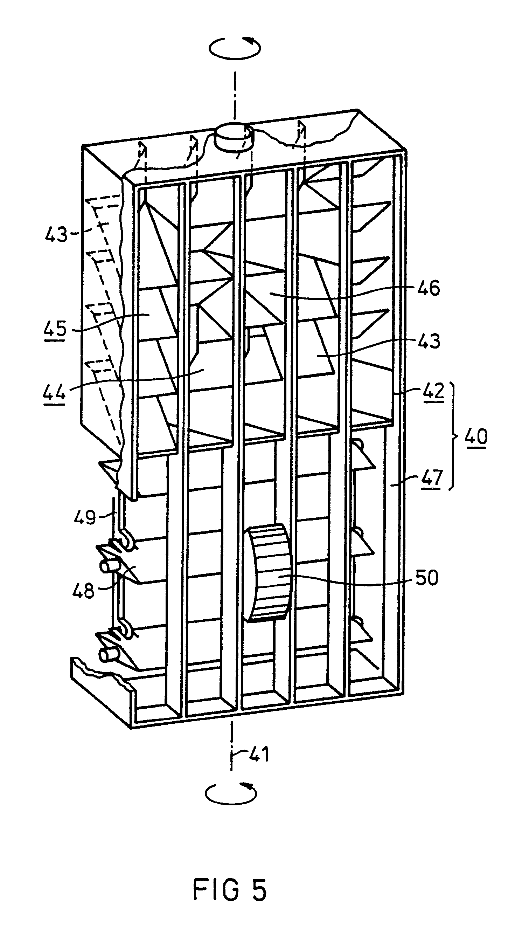

Fig. 5 zeigt einen kombinierten Luftauslaß 40, der um eine vertikale Achse 41 drehbar ist und aus einem oberen, quadratisch ausgebildeten Dralluft-Auslaß 42 und einem unteren Lamellen-Auslaß 47 besteht. Der obere Luftauslaß hat einen zentralen Luftführungskanäl 46, um den zwei ringartige Auslaßbereiche 44 und 45 angeordnet sind. Die Leitwände 43 des inneren Auslaßbereiches 44 sind im Uhrzeigersinn gegenüber der Achse des oberen Luftauslasses geneigt, während die Leitwände 43 des äußeren Auslaßbereiches entgegen dem Uhrzeigersinn gegenüber der Achse dieses Luftauslasses geneigt sind.

Der untere Lamellenauslaß 47 ist mit drei Lamellen 48 ausgerüstet, die über eine Koppelstange 49 miteinander verbunden sind. An der mittleren Lamelle ist der Bedienungsknopf 50 angeordnet. -Den beiden Luftauslässen sind in nicht näher dargestellter Weise Luftzufuhrkanäle zugeordnet, die einzeln absperrbar sind.

**Ansprüche**

1. Luftauslaß für Innenräume, insbesondere für den Innenraum eines Kraftfahrzeuges, dessen Auslaßöffnung zumindest teilweise durch zur Achse (10) des Luftauslasses (1) geneigte Leitwände (8) in eine größere Anzahl von Luftführungskanälen (9) unterteilt ist, die wenigstens zwei ebene, einander ringartig umschließende Auslaßbereiche (3 bzw. 4) bilden, **dadurch gekennzeichnet, daß** jeder Auslaßbereich (3 bzw. 4) mit zur Achse (10) des Luftauslasses (1) geneigten Leitwänden (8) versehen ist und die Leitwände des einen Auslaßbereiches (3) entgegengesetzt zu den entsprechenden Leitwänden des anderen Auslaßbereiches (4) geneigt sind.

2. Luftauslaß nach Anspruch 1, **dadurch gekennzeichnet, daß** der umschließende Auslaßbereich (4) von einem oder mehreren weiteren Auslaßbereichen (11, 12, 13) umschlossen ist und/oder daß der umschlossene Auslaßbereich einen oder mehrere weitere Auslaßbereiche (2) umschließt.

3. Luftauslaß nach Anspruch 2, **dadurch gekennzeichnet, daß** die weiteren Auslaßbereiche (11, 12, 13) ebenfalls in Luftführungskanäle (9) unterteilt sind.

4. Luftauslaß nach Anspruch 3, **dadurch gekennzeichnet, daß** die unterteilenden Leitwände (8) eines oder mehrerer weiterer Auslaßbereiche (11, 12, 13) ebenfalls gegenüber der Achse des Luftauslasses (1) geneigt sind.

5. Luftauslaß nach Anspruch 4 mit fünf oder mehr Auslaßbereichen, **dadurch gekennzeichnet, daß** die unterteilenden Leitwände von zwei oder mehr einander benachbarten Auslaßbereichen in der gleichen Richtung geneigt sind.

6. Luftauslaß nach einem der Ansprüche 1 bis 5, **dadurch gekennzeichnet, daß** die Neigungswinkel der Leitwände (26) eines Auslaßbereiches (23) gruppen- oder segmentweise unterschledlich sind.

7. Luftauslaß nach einem der Ansprüche 1 bis 6, **dadurch gekennzeichnet, daß** die inneren und die äußeren Seitenwände (6', 7') der Luftführungskanäle gegenüber der Luftauslaßachse nach außen geneigt sind.

8. Luftauslaß nach einem der Ansprüche 1 bis 7, **dadurch gekennzeichnet, daß** die Luftführungskanäle der Auslaßbereiche kreisringförmig oder rechteckförmig, insbesondere quadratisch, angeordnet sind.

9. Luftauslaß nach einem der Ansprüche 1 bis 8, **dadurch gekennzeichnet, daß** innerhalb des umschlossenen Auslaßbereiches ein innerster, zentraler Auslaßbereich angeordnet ist, dessen Leitwände (33) parallel zueinander verlaufen.

10. Luftauslaß nach einem der Ansprüche 1 bis 9, **dadurch gekennzeichnet, daß** die Neigung wenigstens einiger Leitwände (24) eines oder mehrerer Auslaßbereiche (23) einstellbar ist.

**Claims**

1. An air outlet for interiors, in particular for the interior of a motor vehicle, the outlet opening of which is sub-divided at least partially by guiding walls (8), inclined to the axis (10) of the air outlet (1), into a larger number of air guide ducts (9), which form at least two level discharge zones (3 or 4) surrounding each other in a ring form, characterised in that each discharge zone (3 or 4) is provided with guiding walls (8), inclined to the axis (10) of the air outlet (1), and the guiding walls of the one discharge zone (3) are inclined contrary to the corresponding guiding walls of the other discharge zone (4).

2. An air outlet according to claim 1, characterised in that the surrounding discharge zone (4) is surrounded by one or several further discharge zones (11, 12, 13) and/or that the surrounded discharge zone surrounds one or several further discharge zones (2).

3. An air outlet according to claim 2, characterised in that the further discharge zones (11, 12, 13) are also sub-divided into air guide ducts (9).

4. An air outlet according to claim 3, characterised in that the sub-dividing guiding walls (8) of one or several further discharge zones (11, 12, 13) are also inclined relative to the axis of the air outlet (1).

5. An air outlet according to claim 4 with five or more discharge zones, characterised in that the sub-dividing guiding walls of two or more discharge zones adjacent to each other are inclined in the same direction.

6. An air outlet according to one of claims 1 to 5, characterised in that the angle of inclination of the guiding walls (26) of a discharge zone (23) vary in groups or segments.

7. An air outlet according to one of claims 1 to 6, characterised in that the inner and the outer side walls (6', 7') of the air guide ducts are inclined outwards relative to the air outlet axis.

8. An air outlet according to one of claims 1 to 7, characterised in that the air guide ducts of the discharge zones are arranged in a circular or rectangular form, in particular in a square form.

9. An air outlet according to one of claims 1 to 8, characterised in that within the surrounded discharge zone an innermost, central discharge zone is arranged, the guiding walls (33) of which extend parallel to each other.

10. An air outlet according to one of claims 1 to 9, characterised in that the inclination of at least some guiding walls (24) of one or several discharge zones (23) is able to be adjusted.

## Revendications

1. Buse d'aération pour des habitacles, notamment pour l'habitacle d'un véhicule automobile, dont l'orifice de sortie est subdivisé au moins partiellement, par des parois déflectrices (8) inclinées par rapport à l'axe (10) de la buse d'aération (1) en un grand nombre de canaux de passage de l'air (9) qui forment au moins deux zones de sortie (3 et 4) planes et s'entourant annulairement, caractérisée en ce que chaque zone de sortie (3 et 4) est munie de parois déflectrices (8) inclinées par rapport à l'axe (10) de la buse d'aération (1) et les parois déflectrices de l'une des zones de sortie (3) sont inclinées en sens opposé par rapport aux parois déflectrices correspondantes de l'autre zone de sortie (4).

2. Buse d'aération suivant la revendication 1, caractérisée en ce que la zone de sortie enveloppante (4) est entourée d'une ou de plusieurs autres zones de sortie (11, 12, 13) et/ou en ce que la zone de sortie entourée enveloppe une ou plusieurs autres zones de sortie (2).

3. Buse d'aération suivant la revendication 2, caractérisée en ce que les autres zones de sortie (11, 12, 13) sont subdivisées également en canaux de passage de l'air (9).

4. Buse d'aération suivant la revendication 3, caractérisée en ce que les parois déflectrices (8) de subdivision d'une ou de plusieurs autres zones de sortie (11, 12, 13) sont également inclinées par rapport à l'axe de la buse d'aération (1).

5. Buse d'aération suivant la revendication 4 ayant cinq ou de cinq zones de sortie, caractérisée en ce que les parois déflectrices de subdivision de deux ou de plusieurs zones de sortie mutuellement adjacentes sont inclinées dans le même sens.

6. Buse d'aération suivant l'une des revendications 1 à 5, caractérisée en ce que les angles d'inclinaison des parois déflectrices (26) d'une zone de sortie (23) sont différents par groupe ou par segment.

7. Buse d'aération suivant l'une des revendications 1 à 6, caractérisée en ce que les parois latérales intérieures (6') et extérieures (7') des canaux de passage de l'air sont inclinées vers l'extérieur par rapport à l'axe de la buse d'aération.

8. Buse d'aération suivant l'une des revendications 1 à 7, caractérisée en ce que les canaux de passage de l'air des zones de sortie sont disposés sous la forme d'un anneau de cercle ou en forme de rectangle, notamment de carré.

9. Buse d'aération suivant l'une des revendications 1 à 8, caractérisée en ce qu'à l'intérieur de la zone de sortie qui est enveloppée, est prévue une zone de sortie centrale la plus à l'intérieur et dont les parois déflectrices (33) s'étendent parallèlement les unes aux autres.

10. Buse d'aération suivant l'une des revendications 1 à 9, caractérisée en ce que l'inclinaison d'au moins quelques parois déflectrices (24) d'une ou de plusieurs zones de sortie (23) est réglable.

FIG 1

FIG 2

FIG 3

FIG 4

FIG 5